# EUROPEAN PATENT APPLICATION

(11) **EP 1 103 887 A1**
(43) Date of publication of application: **30.05.2001**
(21) Application number: 99123251.3
(22) Date of filing: 29.11.1999
(51) Int. Cl.: G06F 3/12

(54) **Method of preparing documents for printing**

(71) Applicant: Sun Microsystems, Inc., Palo Alto, California 94303-4900 (US)
(72) Inventor: Breuer, Matthias, 21220 Seevetal (DE)
(74) Representative: Betten & Resch

(57) **Abstract**

A method for preparing a document, which is formatted in a first printing format required by a first printer, for being printed on a second printer requiring a second printing format, wherein said document contains information and objects, said information having been created in a first data format by an information module, said objects having been created in at least one second data format by at least one object module and said objects being interspersed in said information, said method comprising the steps of initializing said information module to reformat said information in said second printing format, and initializing said at least one object module to reformat said objects in said second printing format. Furthermore, a computer program for carrying out this method and a data carrier storing such a program are provided.

## Description

The present invention relates to a method for preparing documents for being printed on an arbitrary printer requiring a certain printing format. In the following, documents are understood to be data files with a content of any kind, for example text, spreadsheets, pictures, tables or formulas.

Documents frequently have to be printed on different printers requiring different printing formats for correctly printing the document. These printing formats are printer-specific, that means a certain type of printer, sometimes even a certain individual printer, requires a certain printing format. If the document is not correctly formatted, that means if it is not formatted in the printing format required or supported by the printer, the document may not be printed correctly on this printer.

This problem becomes even more virulent if the document contains information and objects. Herein, the information has been created in a first data format, for example by a text processing module, i.e. software, whereas the objects, like pictures, tables or formulas, have been created in a second data format by a picture, table or formula module. The objects are interspersed in the information. Regularly the document was produced in a printing format corresponding to a certain printer, frequently one printer connected to the computer or computer network in which the document is created. If the printer has to be switched and the new printer supports only a printing format different than the initially chosen printing format the document must be reformatted to the new printer's printing format. In prior art solutions this reformatting regularly merely changes the printing format of the information not of the objects, because only the module supporting the information handles the document and this module is not able to reformat the objects interspersed in this document. The consequence is lower quality print-outs, particularly with squeezed or overwritten portions, if the initial printer or printer type is switched.

Therefore, the object of the present invention is to provide a method for automatic reformatting of a document, in order to provide high quality print-outs even if the initial printer is changed.

This object is achieved by the present invention. The present invention relates to a method for preparing a document, which is formatted in a first printing format required by a first printer, for being printed on a second printer requiring a second printing format, wherein said document contains information and objects, said information having been created in a first data format by an information module, said objects having been created in at least one second data format by at least one object module and said objects being interspersed in said information, said method comprising the steps of: initializing said information module to reformat said information in said second printing format, and initializing said at least one object module to reformat said objects in said second printing format.

Different types of printers usually print the same document in a different manner. This depends on the physical requirements of the printer. To print a document on a printer in an optimal way the computer module in which the document was created has to know these requirements. These requirements are saved in a printer specific data file, called driver. Computer modules employ these drivers to create, for example, a print preview of the document and, particularly, to prepare the document for being printed. Computer modules known in the art, for example, apply the driver of the printer defined as standard-printer simultaneously during the creation of the document.

Frequently, the user has access to more than one printer. For example, the user can employ a stand-alone computer system, where more than one printer is connected to the computer, the computer system can be connected to a network, where the user has access to several connected printers or the user carries the document on a disk to another computer connected to another printer. If the user now wants to print his document on another printer than the printer based on which the document has been initially formatted, the document has to be reformatted to adapt the layout of the document according to the requirements of the other printer.

This reformatting can only be carried out by the computer module which has created the information or object, that means the respective information or object module. Therefore, according to the present invention, in case the printer has been changed, the information module is initialized for applying the printing format of the newly chosen printer. Then the object module or the plurality of object modules corresponding to the interspersed objects is initialized in order to apply the new printing format also to the objects included in the document. Herewith, the full document, not only the information, which frequently forms only the framework for important objects, can be reformatted to the new printing format so that proper printing of the whole document is possible.

In the scope of the present invention the object modules may be initialized, that means called to act on their product, i.e. one or several objects of the document, in any suitable manner. The information module will frequently be the computer module under which the document is handled in the computer system before printing, for example, a word processing module, so that the initialization of the information module will be easy. Object modules will, however, regularly be closed or not available anymore in the computer system at the time of required reformatting. Therefore, initializing the object module(s) may require the reactivation of closed modules, including, if necessary, the tracking of non-available modules outside the computer system. This tracking outside the computer system may result in a search for an object module on an object module server which is provided in the scope of a user service, for example by the manufacturer of the information module. Such a server may be accessible via any data line, including telephone lines and intranet or internet facilities.

In order to know the goal of such a search for object modules the information module may have a list of the objects which are interspersed in the information and about the corresponding object modules. If this should, for some reason, not be the case the method of the present invention may include a searching step to identify objects in the information and their nature, that means the object module which has created them.

According to one embodiment of the invention the above described steps of initializing the information module and the at least one object module are only carried out after recognizing said first printing format and said second printing format and comparing said first printing format and said second printing format and if said first and said second printing format are not identical. If the first and the second printer require identical printing formats there is no need to open the involved modules and to reformat the document. This step can avoid that in such a case the unnecessary reformatting step is carried out.

In the method according to the present invention said steps of initializing the information module and the at least one object module may be carried out in response to a signal from a user interface of a computer system representing a user's choice for said second printer. In this way, the method of the present invention is carried out if the user chooses a different printer. This signal can be generated by a printer manager, wherein the user decides on which printer he wants to print.

The method of the present invention may be implemented in a computer program, including comprehensive office modules. Such a computer program may be stored on any common data carrier like, for example, a floppy disk or a compact disk (CD), as well as on any common computer system's storage facilities like hard disks. Therefore, the present invention also relates to a data carrier for storing a computer program for carrying out the inventive method. The present invention also relates to a method for using a computer system for carrying out the presented inventive method. Furthermore, the present invention provides a computer system with a storage medium on which a computer program is stored for carrying out the method according to the present invention as it was described above.

The following example describes an embodiment of the present invention. However, it is understood that the invention is not limited to this example.

This embodiment is in the following described exemplary along figures 1 to 3, wherein the figures show:
- Fig. 1:: A diagram representing an example for a computer system being usable in the scope of the present invention.
- Fig. 2:: A print-out of a document created with a method known in the prior art.
- Fig. 3:: A print-out of a document created with a method according to the present invention.

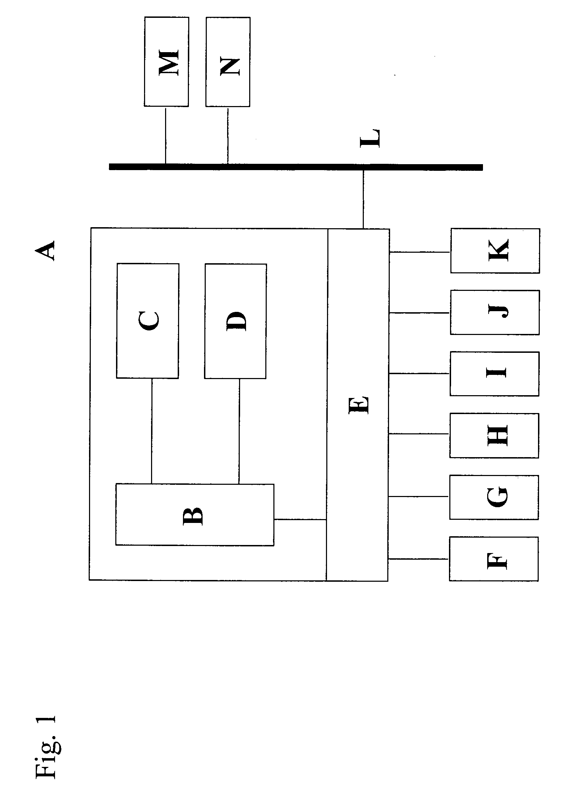

A user who desires to create a document regularly employs a computer system. Fig. 1 shows an example of a computer system A suitable to be used in the scope of the present invention. This computer system comprises a processor B, memories C, D and an i/o interface E. The memory of the computer system is divided in this example into a volatile memory C, like a working memory, and a non-volatile memory D, like a hard disk. Via the i/o interface E the computer system may, for example, be connected with input/output devices F to L. Common input/output devices are a keyboard F, a monitor G and a local printer H. Other input devices like mouse I, scanner J and CD-ROM K are also possible. Frequently, the computer system is also connected to a computer network L via this i/o interface E. The computer network L includes in this example two printers M and N. The first printer M is the standard printer in the computer system of the user. The computer system further comprises software, including several computer modules, namely an information module - for example a word processing program - and several object modules - the following example requires at least one for formulas.

For creating a document the user first employs the information module, in this example a text module, on his computer system A. The user creates his desired text document by employing the input device of the computer system A, for example the keyboard F. In this text document the user intersperses, for example, objects, like formulas, made by means of the object module for formulas.

In this example each object module creates its objects corresponding to the requirements of the default printer, in this example the first printer M. These objects obtain a certain printing format corresponding to the printing requirements of the first printer M. These printing requirements of the first printer M are stored in a special data file, the driver, which is accessible for the object modules. The same applies for the information and the information module.

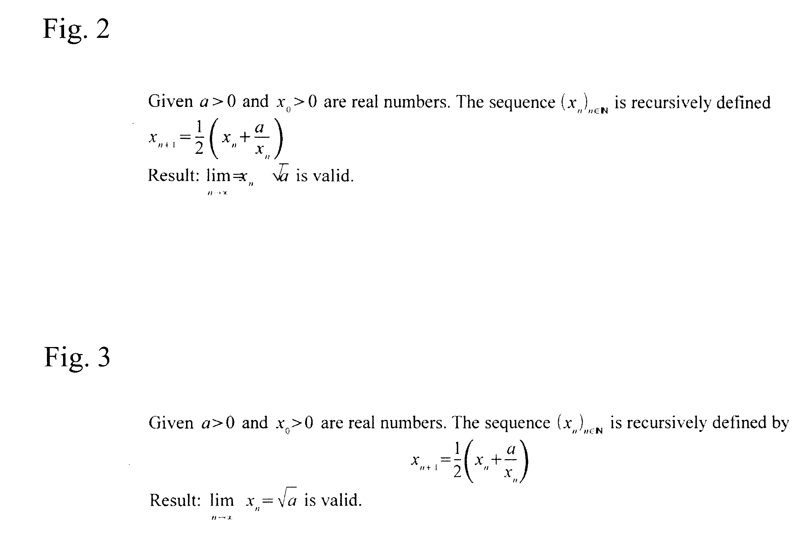

If the user decides to print his document on the second printer N, prior art systems reformat only the parts of the document which have been created by the information module, in this example a text module, according to the requirements of the second printer N. The interspersed objects, in this example the formulas, are still formated based on the requirements of the first printer M. This may result in the print-out shown in Fig. 2.

In order to achieve a correct print-out in every case, the whole document has to be reformatted according to the requirements of the second printer N. The driver for the second printer has to be available for any computer module which has been employed during the creation of the document.

A print out process according to the present invention will, for example, proceed as follows: When the user wants to print the document, he will open this document in the information module or the document is already opened. Then, he informs the computer system A, via an input device like the keyboard F or the mouse I, that he wants to print this document. In response to this user request the computer system A will, for example, open a window on the monitor G of the system, where the user can choose certain print options. For example, the user can decide which pages should be printed, how often these pages should be printed, in which order these should be printed. In this window there is also the possibility to choose on which printer the document should be printed. The standard printer, in this example the first printer M, will be highlighted. If the user chooses another printer, the computer module will start, in this example, a process according to the present invention.

In a first step the computer module will search in the document, planned for printing, for interspersed objects. This will be frequently done by employing a list including all interspersed objects. Alternatively, this can also be done by going through the document manually. In a second step it will be analyzed if the interspersed objects are created according to the requirements of another printer or not. This can be done also in at least two different ways. If the printing formats of the objects are stored in the object listing, the computer system will compare these printing formats with the requirements of the second printer N and decide whether they are different. Another possibility is that the computer system initializes, that means activates, the object modules of the objects interspersed in the information in order to check the printers employed during the creation of these objects, and to recognize, if the printer corresponds to the requirements of the second printer N.

This check can include merely a comparison of the employed driver or a comparison of the resulting printing format. If the object is, for example, formatted based on a driver which is different to the driver of the second printer N, but a print-out based on the employed driver would be as good as a print-out based on the driver of the second printer N, there is no need to initialize the corresponding object module.

Based on this comparison, a method according to the present invention starts to reformat the information and the objects interspersed in the information of the document. The information will be reformatted, if necessary, in the printing format of the second printer N by the information module. For each object, which is formatted in a printing format different from the required one of the second printer N, the corresponding object module with the object will be initialized, that means activated, and the object will be reformatted according to the requirements of the second printer N by the corresponding object module. Hereby, the full document, including not only the information, but also objects, in this example the formulas, is properly reformatted and can therefore be properly printed on any printer. This results in the proper print-out shown in Fig. 3.

This same method may of course also be applied without any interference of a user. For example, in larger computer networks, where printers may be more frequently replaced by newer machines having different printer drivers, the system may check with every printing request whether a reformatting is necessary. This check be carried out by contacting the actual printer, comparing his printing format with the printing format of the document and, in case of a difference there between, reformatting the document according to the present invention.

The described process can also be carried out if the user has changed the printer in an earlier step. In this case the process may, for example, include a check routine which checks if all objects in the frame document are formatted according to the requirements of the printer, on which the computer system wants to print the document.

In any chosen embodiment will the present invention provide a useful tool for printing complex documents on different printers, be it in a computer network, be it on different printers to which the user has access during travelling or the like.

## Claims

1. A method for preparing a document, which is formatted in a first printing format required by a first printer, for being printed on a second printer requiring a second printing format,
wherein said document contains information and objects, said information having been created in a first data format by an information module, said objects having been created in at least one second data format by at least one object module and said objects being interspersed in said information, said method comprising the steps of:
a) initializing said information module to reformat said information in said second printing format, and
b) initializing said at least one object module to reformat said objects in said second printing format.

2. A method according to claim 1, wherein steps a) and b) are only carried out after recognizing said first printing format and said second printing format and comparing said first printing format and said second printing format and if said first and said second printing format are not identical.

3. A method according to any of the preceding claims, wherein steps a) and b) are carried out in response to a signal from a user interface of a computer system representing a user's choice for said second printer.

4. A method according to any of the preceding claims, wherein said initializing of an object module in step b) includes the contacting of this object module in an object module server.

5. A computer program for carrying out a method according to any of the preceding method claims on a computer system.

6. A data carrier for storing a computer program for carrying out a method according to any of the preceding method claims on a computer system.

7. A method for using a computer system for carrying out a method according to any of the preceding method claims.

8. A computer system comprising a storage medium on which a computer program for carrying out a method according to any of the preceding method claims is stored.
